# EUROPEAN PATENT APPLICATION

(11) **EP 4 039 718 A1**
(43) Date of publication of application: **10.08.2022**
(21) Application number: 20870964.2
(22) Date of filing: 26.08.2020
(51) Int. Cl.: C08F 214/02, C08F 214/18, C08F 218/12, C09K 3/18, C08F 2/18

(54) **WATER REPELLENT OIL REPELLENT AGENT COMPOSITION, METHOD FOR PRODUCING SAME, AND ARTICLE**

(30) Priority: 02.10.2019 JP 2019182132
(71) Applicant: AGC INC., Chiyoda-ku, Tokyo 1008405 (JP)
(72) Inventor: SHIOTA, Yukiko, Tokyo 100-8405 (JP); HARA, Hiroyuki, Tokyo 100-8405 (JP)
(74) Representative: Müller-Boré & Partner Patentanwälte PartG mbB
(86) International application number: PCT/JP2020/032235
(87) International publication number: WO 2021/065256

(57) **Abstract**

A water/oil repellent composition which can provide an article with high and durable water repellency is provided. A water/oil repellent composition comprising units based on a fluoroolefin represented by the formula (1): CH₂=CH-R^{f} (wherein R^{f} is a C₁₋₈ perfluoroalkyl group), units based on a vinyl carboxylate having a C₁₂ or higher alkyl group, and units based on a haloolefin other than the fluoroolefin or a derivative thereof, wherein the ratio of units based on the fluoroolefin is from 15 to 35 mol%, the ratio of units based on the vinyl carboxylate is from 30 to 60 mol%, and the ratio of units based on the haloolefin or derivative thereof is from 5 to 55 mol%, relative to all the units constituting the fluorinated polymer:

## Description

### TECHNICAL FIELD

The present invention relates to a water/oil repellent composition, a method for its production and an article.

### BACKGROUND ART

As a way to impart water/oil repellency to the surface of an article such as textile products, treatment of the article with a water/oil repellent composition comprising a fluorinated polymer comprising units based on a (meth)acrylate having a perfluoroalkyl group is known. However, the ester linkage in units based on the (meth)acrylate easily breaks upon alkaline hydrolysis. Therefore, the water/oil repellency of an article can wane as the fluorinated polymer loses perfluoroalkyl groups that way.

A water/oil repellent composition comprising a fluorinated polymer having no units based on a (meth)acrylate having a perfluoroalkyl group is known to impart alkali-resistant water/oil repellency to an article. As fluorinated polymers comprising no units based on a (meth)acrylate having a perfluoroalkyl group, for example, fluorinated polymers comprising units based on a (perfluoroalkyl)ethylene are known.

Patent Document 1 discloses a dispersion containing a polymer comprising units based on a (perfluoroalkyl)ethylene. As monomers copolymerizable with a (perfluoroalkyl)ethylene, various monomers such as vinyl stearate, vinyl chloride and 4-hydroxybutyl vinyl ether are disclosed. The document discloses a copolymer of (perfluorohexyl)ethylene (49.8 mol%) and vinyl stearate in Example 10 and a copolymer of (perfluorohexyl)ethylene (40 mol%), vinyl acetate and vinyl chloride in Example 29.

Patent Document 2 discloses a surface treatment composition comprising a fluorinated polymer comprising units based on a fluoroolefin and units based on a vinyl-containing hydrocarbon, and as the vinyl-containing hydrocarbon, vinyl stearate is disclosed. The document also discloses as optional monomers, fluorine-free uncrosslinkable monomers such as vinyl halides and vinyl alkyl ethers, and fluorine-free crosslinkable monomers. The document discloses a copolymer of (perfluorohexyl)ethylene (15 mol%) and vinyl stearate in Example 18.

### PRIOR ART DOCUMENTS

### PATENT DOCUMENTS

Patent Document 1: WO2019/138680
Patent Document 2: WO2013/058333

### DISCLOSURE OF INVENTION

### TECHNICAL PROBLEM

However, the water repellency of articles treated with the water/oil repellent compositions comprising a fluorinated polymer disclosed in the Examples of Patent Documents 1 and 2 is not high and durable enough.

The present invention provides a water/oil repellent composition which can provide an article with high and durable water repellency, a method for its production and an article with high and durable water repellency.

### SOLUTION TO PROBLEM

The present invention provides the following aspects.
[1] A water/oil repellent composition comprising a fluorinated polymer which comprises units based on a fluoroolefin represented by the following formula (1), units based on a vinyl carboxylate having a C₁₂ or higher alkyl group and units based on a haloolefin other than the fluoroolefin or a derivative thereof,
   wherein the ratio of units based on the fluoroolefin is from 15 to 35 mol%, the ratio of units based on the vinyl carboxylate is from 30 to 60 mol%, and the ratio of units based on the haloolefin or derivative thereof is from 5 to 55 mol%, relative to all the units constituting the fluorinated polymer:

      CH₂=CH-R^{f} (1)
   wherein R^{f} is a C₁₋₈ perfluoroalkyl group.
[2] The water/oil repellent composition according to [1], wherein R^{f} in the formula (1) is a C₁₋₆ perfluoroalkyl group.
[3] The water/oil repellent composition according to [1] or [2], wherein the vinyl carboxylate has a linear C₁₂ or higher alkyl group.
[4] The water/oil repellent composition according to [1] or [2], wherein the vinyl carboxylate has a C₁₂₋₃₀ alkyl group.
[5] The water/oil repellent composition according to [1] or [2], wherein the vinyl carboxylate has a C₁₆₋₂₀ alkyl group.
[6] The water/oil repellent composition according to any one of [1] to [5], wherein the units based on a haloolefin other than the fluoroolefin or a derivative thereof are units based on vinyl chloride or vinylidene chloride.
[7] The water/oil repellent composition according to any one of [1] to [6], wherein the fluorinated polymer further comprises units based on a crosslinkable monomer having a reactive group, and
   the ratio of units based on the crosslinkable monomer is from 0.1 to 20 mol% relative to all the units constituting the fluorinated polymer.
[8] The water/oil repellent composition according to [7], wherein the reactive group is a hydroxy group, an epoxy group or an amino group.
[9] The water/oil repellent composition according to [7] or [8], wherein the crosslinkable monomer is a vinyl ether or an allyl ether.
[10] A method for producing a water/oil repellent composition, which comprises polymerizing a monomer component in an emulsion comprising the monomer component, a surfactant and a polymerization initiator,
   wherein the monomer component comprises a fluoroolefin represented by the following formula (1), a vinyl carboxylate having a C₁₂ or higher alkyl group and a haloolefin other than the fluoroolefin or a derivative thereof, and
   the ratio of the fluoroolefin is from 15 to 35 mol%, the ratio of the vinyl carboxylate is from 30 to 60 mol%, and the ratio of the haloolefin or a derivative thereof is from 5 to 55 mol%, relative to the monomer component:

      CH₂=CH-R^{f} (1)
   wherein R^{f} is a C₁₋₈ perfluoroalkyl group.
[11] An article treated with the water/oil repellent composition as defined in any one of [1] to [9].

### ADVANTAGEOUS EFFECTS OF INVENTION

The water/oil repellent composition of the present invention can provide an article with high and durable water repellency.

The method for producing a water/oil repellent composition of the present invention can produce a water/oil repellent composition which can provide an article with high and durable water repellency.

The article of the present invention has high and durable water repellency.

### DESCRIPTION OF EMBODIMENTS

The terms used in the present invention have the following meanings and definitions.

A "unit based on a monomer" is a generic term for an atomic group derived from 1 molecule of the monomer by polymerization directly, or by polymerization and subsequent partial chemical modification.

A "(meth)acrylate" is a generic term for an acrylate and a methacrylate. Similarly, a "(meth)acryloyloxy group" is a generic term for an acryloyloxy group and a methacryloyloxy group.

The number average molecular weight (hereinafter referred to as "Mn") and mass average molecular weight (hereinafter referred to as "Mw") of a polymer are polymethyl methacrylate equivalent molecular weights measured by gel permeation chromatography (hereinafter referred to as "GPC") from a calibration curve obtained using polymethyl methacrylate standards.

A solid content is calculated as (solid mass / sample mass) × 100, wherein the sample mass is the mass of a sample before heating, and the solid mass is the mass of the sample after 4 hours of heating at 120°C in a convection dryer.

### [Water/Oil Repellent Composition]

The water/oil repellent composition of the present invention (hereinafter referred to as "the present composition") comprises a specific fluorinated polymer (hereinafter referred to as "polymer (A)").

The present composition preferably comprises an aqueous medium, which will be described later.

The present composition is preferably in the form of a polymer dispersion comprising a polymer (A), an aqueous medium and a surfactant.

The present composition means both a dispersion obtained by the method of the present invention for producing a polymer (A), which will be described later, and a dispersion obtained by diluting the dispersion with an aqueous medium before treatment of an article.

The present composition may comprise additional components, if necessary.

### (Polymer (A))

The polymer (A) comprises units (hereinafter referred to as "units a") based on a fluoroolefin represented by the following formula (1) (hereinafter referred to as "monomer a"), units (hereinafter referred to as "units b") based on a vinyl carboxylate having a C₁₂ or higher alkyl group (hereinafter referred to as "monomer b") and units (hereinafter referred to as "units c") based on a haloolefin other than the fluoroolefin or a derivative thereof (hereinafter referred to as "monomer c").

CH₂=CH-R^{f} (1)

wherein R^{f} is a C₁₋₈ perfluoroalkyl group.

The polymer (A) may further comprise units (hereinafter referred to as "units d") based on a crosslinkable monomer having a reactive group (hereinafter referred to as "monomer d"), if necessary.

The polymer (A) may further comprise units (hereinafter referred to as "units e") based on a monomer (hereinafter referred to as "monomer e") other than the monomer a, the monomer b, the monomer c and the monomer d.

R^{f} in the monomer a preferably has from 1 to 6 carbon atoms, more preferably from 4 to 6 carbon atoms, particularly preferably 6 carbon atoms in view of conversion rate to a polymer (A), availability of the raw materials and ease of handling.

R^{f} is preferably linear.

As the monomer a, for example, CH₂=CH-CF₃, CH₂=CH-CF₂CF₃, CH2=CH-CF2CF2CF3, CH₂=CH-CF(CF3)₂, CH₂=CH-(CF₂)₃CF₃, CH₂=CH-CF₂CF(CF₃)₂, CH2=CH-C(CF3)3, CH₂=CH-(CF₂)₄CF₃, CH2=CH-CF2CF2CF(CF3)2, CH₂=CH-(CF₂)₅CF₃, CH₂=CH-(CF₂)₅CF(CF₃)₂ and CH₂=CH-(CF₂)₇CF₃ may be mentioned.

As the monomer a, CH₂=CH-CF₃, CH₂=CH-CF₂CF₃, CH₂=CH-CF(CF₃)₂, CH₂=CH-(CF₂)₃CF₃ and CH₂=CH-(CF₂)₅CF₃ are preferred, CH₂=CH-CF₃, CH₂=CH-CF₂CF₃, CH₂=CH-(CF₂)₃CF₃ and CH₂=CH-(CF₂)₅CF₃ are more preferred, and CH₂=CH-(CF₂)₃CF₃ and CH₂=CH-(CF₂)₅CF₃ are further preferred.

Two or more monomers a may be used in combination.

The monomer b is preferably a monomer represented by the following formula (2).

CH₂=CH-O-C(=O)-R¹ (2)

wherein R¹ is a C₁₂ or higher alkyl group.

R¹ in the formula (2) has at least 12 carbon atoms, preferably at least 16 carbon atoms to attain high and durable water repellency. R¹ preferably has at most 30 carbon atoms, more preferably at most 20 carbon atoms, in view of availability and ease of handling. R¹ is preferably linear.

As the monomer b, for example, vinyl myristate, vinyl palmitate, vinyl stearate and vinyl oleate may be mentioned.

The monomer b is preferably vinyl myristate, vinyl palmitate or vinyl stearate, more preferably vinyl stearate.

Two or more monomers b may be used in combination.

Haloolefins as the monomer c, include, for example, vinyl halides, vinylidene halides, fluoroethylenes, and specifically, vinyl chloride, vinylidene chloride, vinyl fluoride, vinylidene fluoride, trifluoroethylene, chlorotrifluoroethylene and tetrafluoroethylene may be mentioned.

As derivatives of haloolefins, for example, perfluoro(alkyl vinyl ethers) may be mentioned. As perfluoro(alkyl vinyl ethers), CF₂=CFOCF₃, CF₂=CFOCF₂CF₃, CF₂=CFOCF₂CF₂CF₃, CF₂=CFOCF₂CF₂CF₂CF₃, CF₂=CFOCF₂CF(CF₃)OCF₂CF₂CF₃ may, for example, be mentioned. The monomer c is preferably a vinyl halide or a vinylidene halide, more preferably vinyl chloride or vinylidene chloride, further preferably vinyl chloride.

Two or more monomers c may be used in combination.

The reactive group in the monomer d may be any group which reacts with another functional group (whether in an optional crosslinking agent in the present composition or on the surface of the article to be treated with the present composition) to form a crosslink, such as a hydroxy group, an epoxy group, an amino group, a monoalkylamino group, a dialkylamino group, a carboxy group, an isocyanato group, an oxazoline group or a carbodiimide group. The alkyl group in a monoalkylamino group or a dialkylamino group has, for example, 1 to 4 carbon atoms.

The reactive group in the monomer d is preferably a hydroxy group, an epoxy group or an amino group, particularly preferably a hydroxy group, in view of the availability and ease of handling.

The monomer d may be a monofunctional monomer having a polymerizable carbon-carbon double bond or a polyfunctional monomer having two or more polymerizable carbon-carbon double bonds, and is preferably a monofunctional monomer for its high polymerizability.

As the monomer d, for example, a vinyl ether, an allyl ether, a (meth)acrylate, a vinyl ester or a (meth)acrylamide compound may be mentioned.

As a vinyl ether, a compound represented by the following formula (3-1) may be mentioned. As an ally ether, a compound represented by the following formula (3-2) may be mentioned. As a (meth)acrylate, a compound represented by the following formula (3-3) may be mentioned.

CH₂=CH-O-Z (3-1)

CH₂=CHCH₂-O-Z (3-2)

CH₂=C(R)C(=O)O-Z (3-3)

Wherein Z is an organic group having a reactive group, and R is a hydrogen atom or a methyl group.

Examples of Z include an aliphatic hydrocarbon group having a reactive group, an aryl group having a reactive group and a cyclic group having a hetero atom substituted with a reactive group.

Examples of the aliphatic hydrocarbon group include an alkyl group, an alkyl group having an oxygen atom between carbon atoms, an alkenyl group, an alkenyl group having an oxygen atom between carbon atoms and a cycloalkyl group. The alkyl group and the alkenyl group have, for example, from 1 to 6 carbon atoms, The number of ring-constituting carbon atoms of the cycloalkyl group is, for example, from 3 to 8.

The hetero atom may, for example, a nitrogen atom, an oxygen atom or a sulfur atom. The cyclic group is preferably saturated and preferably has a 3- to 9-membered ring, more preferably a 3- to 6-membered ring.

Z is preferably a hydroxyalkyl group preferably having from 2 to 6 carbon atoms.

The monomer d is preferably a vinyl ether or an allyl ether, more preferably an allyl ether, in view of copolymerizability with the monomers a to c and resistance to alkali decomposition.

The monomer d is, for example, a vinyl ether having a hydroxy group (such as 2-hydroxyethyl vinyl ether, 3-hydroxypropyl vinyl ether, 4-hydroxybutyl vinyl ether, diethylene glycol monovinyl ether or cyclohexanedimethanol monovinyl ether), a vinyl ether such as glycidyl vinyl ether; an ally ether having a hydroxy group (such as ethylene glycol monoallyl ether, diethylene glycol allyl ether, glycerin monoallyl ether, pentaerythritol triallyl ether or trimethylolpropane diallyl ether), an allyl ether such as glycidyl allyl ether; a hydroxyalkyl (meth)acrylate (such as 2-hydroxyethyl (meth)acrylate, 3-hydroxypropyl (meth)acrylate, 4-hydroxybutyl (meth)acrylate or polyethylene glycol (meth)acrylate), a (meth)acrylate such as glycidyl (meth)acrylate or 2-[(3,5-dimethylpyrazolyl)carbonylamino]ethyl (meth)acrylate; or a (meth)acrylamide compound such as N-methylolacrylamide.

Among them, a vinyl ether having a hydroxy group or an allyl ether having a hydroxy group is preferred, and 4-hydroxybutyl vinyl ether, diethylene glycol monovinyl ether, cyclohexanedimethanol monovinyl ether or ethylene glycol monoallyl ether is more preferred.

Two or more monomers d may be used in combination.

The monomer e may be any monomer copolymerizable with the monomers a to c, and may, for example, be a vinyl ester other than the monomers a to c, an allyl ester, a vinyl ether, an allyl ether, an olefin, a (meth)acrylate, N-vinylpyrrolidone, N-vinyl-ε-caprolactam or ethyl vinyl sulfide.

The vinyl ester may, for example, be a vinyl carboxylate having a C₁₁ or lower alkyl group, such as vinyl acetate, vinyl butyrate, vinyl pivalate, vinyl caproate, vinyl caprylate, vinyl laurate, vinyl benzoate, vinyl chloroacetate or divinyl adipate. As the vinyl ester, vinyl acetate or vinyl pivalate is particularly preferred because an article with high oil repellency, alcohol repellency and water repellency can be obtained.

The allyl ester may, for example, be allyl acetate or diallyl adipate.

The vinyl ether may, for example, be methyl vinyl ether, ethyl vinyl ether, n-butyl vinyl ether, iso-butyl vinyl ether, tert-butyl vinyl ether, stearyl vinyl ether, 1-chloromethyl vinyl ether, 2-chloroethyl vinyl ether, chloropropyl vinyl ether or cyclohexyl vinyl ether.

The allyl ether may, for example, be allyl ethyl ether, diallyl ether or 1,3-diallyloxy-2-propanol.

The olefin may, for example, be ethylene or propylene.

The (meth)acrylate may, for example, be an alkyl (meth)acrylate such as methyl (meth)acrylate, ethyl (meth)acrylate, n-butyl (meth)acrylate, tert-butyl (meth)acrylate, lauryl (meth)acrylate, stearyl (meth)acrylate or behenyl (meth)acrylate; or a fluoroalkyl (meth)acrylate such as 2-perfluorohexylethyl (meth)acrylate. The polymer (A) is preferred to comprise no units based on a (meth)acrylate having a perfluoroalkyl group in order to provide an article with more alkali-resistant water/oil repellency. Therefore, as the (meth)acrylate, fluorine-free (meth)acrylates such as the above-mentioned alkyl (meth)acrylates are preferred.

The ratio of units a to all the units in the polymer (A) is from 15 to 35 mol%, preferably from 18 to 32 mol%, more preferably from 20 to 30 mol%. When the ratio of units a is not lower than the lower limit of the above-mentioned range, an article treated with the present composition has high oil repellency. When the ratio of units a is not higher than the upper limit of the above-mentioned range, an article treated with the present composition has high water repellency.

The ratio of units b to all the units in the polymer (A) is from 30 to 60 mol%, preferably from 32 to 58 mol%, more preferably from 34 to 56 mol%. When the ratio of units b is not lower than the lower limit of the above-mentioned range, an article treated with the present composition has high and durable water repellency. When the ratio of units b is not higher than the upper limit of the above-mentioned range, an article treated with the present composition has durable water repellency.

The ratio of units c to all the units in the polymer (A) is from 5 to 55 mol%, preferably from 15 to 50 mol%, more preferably from 20 to 48 mol%. When the ratio of units c is not lower than the lower limit of the above-mentioned range, an article treated with the present composition has high oil repellency and durable water repellency. When the ratio of units c is not higher than the upper limit of the above-mentioned range, an article treated with the present composition has high water repellency.

The ratio of units d, if present, to all the units in the polymer (A) is preferably from 0.1 to 8 mol%, more preferably from 0.5 to 6 mol%, further preferably from 1 to 4 mol%. When the ratio of units d is not lower than the lower limit of the above-mentioned range, an article treated with the present composition has more durable water repellency. When the ratio of units d is not higher than the upper limit of the above-mentioned range, an article treated with the present composition has higher and more durable water repellency.

The ratio of units e to all the units in the polymer (A) is preferably from at most 10 mol%, more preferably at most 5 mol% and may be 0 mol%.

All the units in the polymer (A) means the sum of units a, units b, units c, units d and units e.

The ratios of the respective units can be determined by ¹H-NMR or calculated from the reaction ratios of the respective monomer components measured by gas chromatography. When the conversion rate of the monomer component to the polymer (A) during production of the polymer (A) is high (for example, at least 90%), the ratios of the respective units may be calculated from the feed amount of the monomer component. The conversion rate is determined by the method described later in the Examples.

The Mn of the polymer (A) is preferably at least 10,000, more preferably at least 11,000, further preferably at least 12,000. The Mn of the polymer (A) is preferably at most 100,000, more preferably at most 70,000, further preferably at most 50,000. When the Mn of the polymer (A) is not lower than the above-mentioned lower limit, an article treated with the present composition has higher water/oil repellency. When the Mn of the polymer (A) is not higher than the above-mentioned upper limit, the polymer (A) is more dispersible in water.

The Mw of the polymer (A) is preferably at least 10,000, more preferably at least 20,000, further preferably at least 30,000. The Mw of the polymer (A) is preferably at most 150,000, more preferably at most 120,000, further preferably at most 100,000. When the Mw of the polymer (A) is not lower than the above-mentioned lower limit, an article treated with the present composition has higher water/oil repellency. When the Mw of the polymer (A) is not higher than the above-mentioned upper limit, the polymer (A) is more dispersible in water.

### (Aqueous Medium)

As the aqueous medium, water or water containing a water-miscible organic solvent may be mentioned.

A water-miscible organic solvent is an organic solvent which can be mixed with water in any ratio. The water-miscible organic solvent is preferably at least one species selected from the group consisting of alcohols (other than ether alcohols), ether alcohols and aprotic polar solvents. As the alcohols, t-butanol and propylene glycol may, for example, be mentioned. As the ether alcohols, 3-methoxymethylbutanol, dipropylene glycol, dipropylene glycol monomethyl ether and tripropylene glycol may, for example, be mentioned. As the aprotic polar solvents, N,N-dimethylformamide, dimethyl sulfoxide, tetrahydrofuran (hereinafter referred to as "THF"), acetonitrile, acetone, 3-methoxy-N,N-dimethylpropamide, 3-butoxy-N,N-dimethylpropanamide, 3-methoxy-3-methyl-1-butanol, triethylene glycol dimethyl ether and tetraethylene glycol dimethyl ether may, for example, be mentioned. When the liquid medium is an aqueous medium, the water-miscible organic solvent is preferably an ether alcohol, more preferably dipropylene glycol, tripropylene glycol or dipropylene glycol monomethyl ether, because the resulting aqueous medium shows high compatibility with the polymer (A) and thereby facilitates formation of a uniform coating on an article.

When the aqueous medium is water containing a water-miscible organic solvent, the amount of the water-miscible organic solvent is preferably from 1 to 80 parts by mass, more preferably from 5 to 60 parts by mass, per 100 parts by mass of water.

### (Surfactant)

The surfactant is preferably a surfactant having no fluorine atoms.

The surfactant may be an anionic surfactant, a nonionic surfactant, a cationic surfactant or an amphoteric surfactant.

As the surfactant, it is preferred to use a nonionic surfactant singly, to use a nonionic surfactant in combination with a cationic or amphoteric surfactant, or to use an anionic surfactant singly, and combined use of a nonionic surfactant and a cationic surfactant is more preferred.

The ratio of a nonionic surfactant to a cationic surfactant (nonionic surfactant / cationic surfactant) is preferably from 100/0 to 40/60 (mass ratio), more preferably from 97/3 to 40/60 (mass ratio).

Combined use of a nonionic surfactant and a cationic surfactant can reduce the total amount of surfactants to 5 parts by mass or less per 100 parts by mass of the polymer (A) and hence can reduce the adverse effect of surfactants on the water/oil repellency of an article treated with the present composition.

Examples of nonionic surfactants include surfactants s1 to s6 described in paragraphs [0067] to [0095] of JP-A-2009-215370.

As the surfactant s1, polyoxyethylene alkyl ether is preferred.

As the surfactant s2, acetylene glycol ethylene oxide adduct is preferred.

As the surfactant s3, a polymerization product of ethylene oxide and propylene oxide is preferred.

Two or more nonionic surfactants may be used in combination.

Examples of cationic surfactants include surfactant s7 described in paragraphs [0096] to [0100] of JP-A-2009-215370.

The surfactant s7 is preferably an ammonium salt having at least one alkyl group, alkenyl group or hydroxyl-terminated polyoxyalkylene chain on the nitrogen atom, instead of hydrogen atom(s), and is more preferably a compound s71 represented by the following formula (s71).

[(R²¹)₄N⁺]·X⁻ Formula (s71)

wherein R²¹ is a hydrogen atom, a C₁₋₂₂ alkyl group, a C₂₋₂₂ alkenyl group, a C₁₋₉ fluoroalkyl group or a hydroxy-terminated polyoxyalkylene chain, provided that not all of the four R²¹'s, which may be the same or different, are hydrogen atoms, and X⁻ is a counterion.

X⁻ is preferably a chlorine ion, an ethyl sulfate ion or an acetate ion.

Examples of the compound s71 include monostearyltrimethylammonium chloride, monostearyldimethylmonoethylammonium ethyl sulfate, mono(stearyl)monomethyldi(polyethylene glycol)ammonium chloride, monofluorohexyltrimethylammonium chloride, di(beef tallow alkyl)dimethylammonium chloride and dimethylmonococonutamine acetate.

Two or more cationic surfactants may be used in combination.

Examples of amphoteric surfactants include surfactant s8 described in paragraphs [0101] to [0102] of JP-A-2009-215370. A single species may be used, or two or more species may be used in combination.

Preferable surfactant combinations are the combination of surfactant s1, surfactant s2 and surfactant s7, the combination of surfactant s1, surfactant s3 and surfactant s7 and the combination of surfactant s1, surfactant s2, surfactant s3 and surfactant s7, and more preferable surfactant combinations are those mentioned above wherein surfactant s7 is a compound s71, because they have little adverse effects on the water/oil repellency of an article treated with the present composition and can provide a stable dispersion of the polymer (A).

### (Additional Components)

Examples of additional components include a fluorinated polymer other than the polymer (A), a fluorine-free polymer, a fluorine-free water/oil repellent, a water soluble polymer resin (such as hydrophilic polyesters and their derivatives, hydrophilic polyethylene glycols and their derivatives, and hydrophilic polyamines glycols and their derivatives), a crosslinking agent, a penetrant (such as nonionic surfactants having a symmetric structure having an acetylene group at the center such as DISPANOL (registered trademark) series manufactured by NOF CORPORATION), colloidal silica (such as SNOWTEX (registered trademark) series manufactured by Nissan Chemical Corporation or ADELITE series manufactured by ADEKA CORPORATION), a defoamer (such as OLFINE (registered trademark) series manufactured by Nissin Chemical Industry Co., Ltd. and FS Antifoam series manufactured by Dow Corning Toray Co., Ltd.), a film-forming assistant, a mothproofing agent, a mildewproofing agent, an antiseptic agent, a flame retardant, an antistatic agent (such as Delectol series manufactured by Meisei Chemical Works, Ltd.), an anticrease agent, a softener (such as a silicone emulsion, a polyethylene wax emulsion or a polyamide wax emulsion) and a pH adjustor (such as diethanolamine, triethanolamine, acetic acid or citric acid).

Incorporation of a crosslinking agent into the present composition tends to improve the adhesion to an article.

The crosslinking agent is preferably an isocyanate crosslinking agent, a methylol crosslinking agent, a carbodiimide crosslinking agent or an oxazoline crosslinking agent.

As the isocyanate crosslinking agents, for example, blocked type aromatic isocyanate crosslinking agents, blocked type aliphatic isocyanate crosslinking agents, non-blocked type aromatic isocyanate crosslinking agents and non-blocked type aliphatic isocyanate crosslinking agents may be mentioned. Isocyanate crosslinking agents which are in the form of an aqueous dispersion containing a surfactant as an emulsifier or inherently water-dispersible isocyanate crosslinking agents having a hydrophilic group are preferred.

As the methylol crosslinking agent, condensates or precondensates of urea or melamine with formaldehyde, methylol-dihydroxyethylene-urea and derivatives thereof, methylol-ethylene-urea, methylol-propylene-urea, methylol-triazone, dicyandiamide-formaldehyde condensates and methylol-carbamate, methylol-(meth)acrylamide, and polymers thereof may, for example, be mentioned.

Carbodiimide crosslinking agents are polymers having a carbodiimide group in the molecule and are highly reactive with carboxy groups, amino groups, active hydrogen groups on an article or the like.

Oxazoline crosslinking agents are polymers having an oxazoline group in the molecule and are highly reactive with carboxy groups on an article or the like.

As other crosslinking agents, for examples, divinyl sulfone, polyamides and their cationic derivatives, polyamines and their cationic derivatives, epoxy derivatives such as diglycidyl glycerol and halide derivatives such as (epoxy-2,3-propyl)trimethylammonium chloride and N-methyl-N-(epoxy-2,3-propyl)morpholinium chloride, ethylene glycol chloromethyl ether pyridinium salt, polyamine-polyamide-epichlorohydrin resins, polyvinyl alcohol and its derivatives, polyacrylamide and its derivatives, glyoxal resin type anticrease agents may be mentioned.

When the present composition contains a methylol crosslinking agent or a glyoxal resin type anticrease agent, it is preferred to incorporate a catalyst in the composition as an additive. The catalyst may, for example, be an inorganic amine or an organic amine. The inorganic amine may, for example, be ammonium chloride. The organic amine may, for example, be an amino alcohol hydrochloride or semicarbazide hydrochloride. The amino alcohol hydrochloride may, for example, be monoethanolamine hydrochloride, diethanolamine hydrochloride, triethanol hydrochloride or 2-amino-2-methylpropanol hydrochloride.

### (Ratios of Respective Components)

When the present composition comprises an aqueous medium, the content of the aqueous medium may be selected appropriately in accordance with the desired solid content.

The solid content of the present composition immediately after production of the composition is preferably from 25 to 70 mass%, more preferably form 30 to 60 mass%.

The solid content of the present composition at the time of treatment of an article is preferably from 0.1 to 7 mass%, more preferably from 0.2 to 5 mass%.

The surfactant content in the present composition immediately after production of the composition is preferably from 1 to 6 parts by mass relative to 100 parts by mass of the polymer (A).

The content of a crosslinking agent in the present composition at the time of treatment of an article is preferably from 1 to 50 parts by mass relative to 100 parts by mass of the polymer (A).

### (Mechanism)

Because the polymer (A) in the present composition described above comprises units a, an article treated with the composition shows alkali-resistant water/oil repellency.

Because the ratios of units a, units b and units c in the polymer (A) in the present composition fall within specific ranges, an article treated with the composition shows high and wash-durable water repellency.

### [Method for Producing Water/Oil Repellent Composition]

The present composition can be produced by a method for producing a water/oil repellent composition comprising a fluorinated polymer which comprises polymerizing a monomer component in an emulsion comprising the monomer component, a surfactant and a polymerization initiator. According to the method, the polymer (A) is obtained with a high conversion rate of the monomer component to the polymer (A) and a high number average molecular weight.

The monomer component comprises a monomer a, a monomer b, a monomer c, and may further comprise a monomer d and a monomer e, if necessary.

The ratio of the monomer a is from 15 to 35 mol%, preferably from 18 to 32 mol%, more preferably from 20 to 30 mol%, relative to the monomer component. If the ratio of the monomer a is not lower than the lower limit of the above-mentioned range, an article treated with the present composition shows high oil repellency. If the ratio of the monomer a is not higher than the upper limit of the above-mentioned range, an article treated with the present composition shows high water repellency.

The ratio of the monomer b is from 30 to 60 mol%, preferably from 32 to 58 mol%, more preferably from 34 to 56 mol%, relative to the monomer component. If the ratio of the monomer b is not lower than the lower limit of the above-mentioned range, an article treated with the present composition shows high and durable water repellency. If the ratio of the monomer b is not higher than the upper limit of the above-mentioned range, an article treated with the present composition shows durable water repellency.

The ratio of the monomer c is from 5 to 55 mol%, preferably from 15 to 50 mol%, more preferably from 20 to 48 mol%, relative to the monomer component. If the ratio of the monomer c is not lower than the lower limit of the above-mentioned range, an article treated with the present composition shows high oil repellency and durable water repellency. If the ratio of the monomer c is not higher than the upper limit of the above-mentioned range, an article treated with the present composition shows high water repellency.

The ratio of the monomer d, if present in the monomer component, is preferably from 0.1 to 8 mol%, more preferably from 0.5 to 6 mol%, further preferably from 1 to 4 mol%, relative to the monomer component. If the ratio of the monomer d is not lower than the lower limit of the above-mentioned range, an article treated with the present composition shows more durable water repellency. If the ratio of the monomer d is not higher than the upper limit of the above-mentioned range, an article treated with the present composition shows higher and more durable water repellency.

The ratio of the monomer e is preferably at most 10 mol%, more preferably at most 5 mol%, and may be 0 mol%, relative to the monomer component.

The monomer component means the sum of a monomer a, a monomer b, a monomer c, a monomer d and a monomer e.

The polymerization initiator may, for example, be a thermal polymerization initiator, a photopolymerization initiator, a radiation polymerization initiator, a radical polymerization initiator or an ionic polymerization initiator, and is preferably a radical polymerization initiator. As the radical polymerization initiator, for example, an azo type polymerization initiator, a peroxide type polymerization initiator or a redox type initiator is employed depending upon the polymerization temperature. As the radical polymerization initiator, preferred is an azo type polymerization initiator, and more preferred is a salt of an azo type compound. The polymerization temperature is preferably from 20 to 150°C.

The amount of the polymerization initiator is preferably from 0.1 to 5 parts by mass, more preferably from 0.1 to 3 parts by mass, per 100 parts by mass of the monomer component.

At the time of polymerization of a monomer component, a molecular weight-controlling agent may be employed. The molecular weight-controlling agent is preferably an aromatic compound, a mercaptoalcohol, a mercaptocarboxylic acid or an alkyl mercaptan, more preferably a mercaptocarboxylic acid or an alkyl mercaptan. Examples of the molecular weight-controlling agent include mercaptoethanol, mercaptopropionic acid, n-octyl mercaptan, n-dodecyl mercaptan, tert-dodecyl mercaptan, stearyl mercaptan and α-methylstyrene dimer (CH₂=C(Ph)CH₂C(CH₃)₂Ph wherein Ph is a phenyl group).

The amount of the molecular weight-controlling agent is preferably at most 5 parts by mass, more preferably at most 2 parts by mass, per 100 parts by mass of the monomer component, and may be 0 parts by mass.

The emulsion may be prepared, for example, by emulsifying a mixture of an aqueous medium, a monomer component and a surfactant in a homogenizer, a high-pressure emulsifying machine or the like and adding a polymerization initiator.

The concentration of the monomer component in the emulsion is preferably from 20 to 60 mass%, more preferably from 30 to 50 mass%. When the concentration of the monomer component in the emulsion is within the above-mentioned range, the monomer component polymerizes into a polymer (A) having a sufficiently high molecular weight with a high conversion rate.

The total amount of the surfactant in the emulsion is preferably from 1 to 6 parts by mass per 100 parts by mass of the monomer component. When the total amount of the surfactant is not lower than the lower limit of the above-mentioned range, the emulsion is excellent in dispersion stability. When the total amount of the surfactant is not higher than the upper limit of the above-mentioned range, the surfactant has little adverse effect on the water/oil repellency of an article treated with the present composition.

The dispersion of the polymer (A) obtained by polymerizing a monomer component in an emulsion may be used as the present composition by itself or after diluted with an aqueous medium to a certain solid content. Additional components may be added to the present composition.

The conversion rate of the monomer component to the polymer (A) at completion of the polymerization is preferably at least 80%, more preferably at least 90%. As the conversion rate increases, the molecular weight of the polymer (A) increases, and the present composition can impart higher water/oil repellency. Because a high conversion rate leads to less damage to polymer performance by remaining monomers and a higher fluorine content of the polymer (A), the present composition can impart high water/oil repellency.

It is preferred to optimize the composition of the emulsion and the polymerization time so that a conversion rate of 80% or higher is achieved.

### (Mechanism)

Because a monomer composition comprising a monomer a is polymerized in the above-mentioned method for producing the present composition, the method can produce the present composition which can impart alkali-resistant water/oil repellency to an article.

Because the monomer composition is polymerized in an emulsion in the method for producing the present composition, the polymer (A) is produced with a high molecular weight, and hence, the present composition can impart high water/oil repellency to an article.

Because in the method for producing the present composition, the ratios of a monomer a, a monomer b and a monomer c in the monomer composition fall within particular ranges, the present composition can impart high and durable water repellency to an article.

### [Article]

The article of the present invention is obtained by treating an article with the present composition.

The article to be treated with the present composition may, for example, be fibers, fabrics (woven fabric, knitted fabric, nonwoven fabric, raised fabric, etc.), textile products using fabrics (clothing such as ki wear, rainwear, coats, jumpers, windbreakers, down jackets, sportswear, workwear, uniforms and protective suits, rucksacks, backpacks, bags, tents, pup tents, etc.), glass, paper, wood, leather, artificial leather, synthetic leather, stone, concrete, ceramics, metals, metal oxides, pottery and porcelain, molded resin products, porous resin products and fibrous porous bodies. Porous resin products include, for example, those used as filters. As the materials for porous resin products, polypropylene, polyethylene terephthalate and polytetrafluoroethylene may, for example, be mentioned. As the materials for fibrous porous bodies, glass fibers, cellulose nanofibers, carbon fibers and cellulose acetate may, for example, be mentioned.

The article to be treated is preferably fiber, a fabric or a textile product using a fabric.

The fibers in it may, for example, be natural fibers such as cotton, wool, silk or cellulose, synthetic fibers such as polyester, polyamide, acrylic or aramid, chemical fibers such as rayon, viscose rayon or lyocell, mixed fibers consisting of natural and synthetic fibers, or mixed fibers consisting of natural and chemical fibers without any particular restrictions. When the fabric as the substrate is a nonwoven fabric, the fibers in it may, for example, be polyethylene, polypropylene, polyolefin, polyethylene terephthalate, polytetrafluoroethylene, glass and rayon fibers.

The thickness of the fabric is usually from 0.01 to 5 mm, though there are no particular restrictions.

An article may be treated by any method, as long as the water/oil repellent composition adheres to the article, and when the present composition comprises a liquid medium, the present composition may be applied to an article by a known coating method such as coating, impregnation, dipping, spraying, brushing, padding, size press and roll coating and then dried.

The solid content of the water/oil repellent composition may be applied to an article in any amount without particular restrictions, but in the case of a fabric, it is applied in an amount of preferably from 0.001 to 1.0 g/g, more preferably from 0.001 to 0.5 g/g, particularly preferably from 0.001 to 0.05 g/g, per unit mass of the fabric, on a solid basis.

The drying may be carried out at ordinary temperature or by heating, preferably by heating. In the case of heating, the heating temperature is preferably form 40 to 200°C. When the water/oil repellent composition comprises a crosslinking agent, it is preferred to cure the composition by heating to the crosslinking temperature of the crosslinking agent or above, if necessary.

### (Mechanism)

The article of the present invention described above shows alkali-resistant water/oil repellency because it is treated with the present composition comprising the polymer (A) comprising units a.

The article of the present invention shows high and durable water repellency because it is treated with the present composition comprising the polymer (A) comprising units a, units b and units c in ratios within specific ranges.

### EXAMPLES

Now, the present invention will be described in further detail with reference to Examples. However, it should be understood that the present invention is by no means restricted thereto.

Examples 1 to 13 are Examples of the present invention, and Examples 14 to 21 are Comparative Examples.

### (Ratios of Monomer Units)

The ratio of the respective monomer units relative to all the units in the fluorinated polymer were calculated by analyzing the fluorinated polymer dispersion obtained in each Example by ¹H-NMR after removal of the surfactant and the solvent, and calculated from the reaction ratio of each monomer determined by gas chromatograph of the fluorinated polymer dispersion obtained in each Example.

### (Conversion Rate)

The theoretical solid content of a polymer dispersion obtained in each Example was calculated from the amounts of raw materials used, and the conversion rate from the monomer component to the fluorinated polymer was calculated from the theoretical solid content and the actual solid content, as the actual value / theoretical value × 100. A conversion rate of 90% or higher was rated as "A" (good), a conversion rate of not lower than 80% and lower than 90% was rated as "B" (satisfactory), and a conversion rate of lower than 80% was rated as "C" (unsatisfactory).

### (Average Molecular Weight)

### <Recovery of Fluorinated Polymer)

6 g of a fluorinated polymer dispersion obtained in each Example was added dropwise to 60 g of a mixture of 6 g of hexane and 54 g of 2-butanol under stirring to precipitate a solid. The mixture was centrifuged at 3000 rpm for 5 minutes, and the solid was separated, then stirred well with 30 g of alcohol denatured with isopropyl alcohol (product name: 95% alcohol denatured with IPA, manufactured by Imazu Chemical Co. Ltd.) and 30 g of ion-exchanged water, and centrifuged at 3000 rpm for 5 minutes. The solid was separated from the supernatant and dried in a vacuum at 35°C overnight to obtain the fluorinated polymer.

### <Measurement of Mn and Mw>

The recovered fluorinated polymer was dissolved in a mixed medium comprising a fluorine-containing medium (AK-225, manufactured by AGC Inc.) / tetrahydrofuran (hereinafter referred to as THF) in a volume ratio of 6/4 to make a solution with a solid content of 0.5 mass%, and the solution was passed through a 0.2 µm filter to prepare an analytical sample. The Mn and Mw were measured by GPC of the analytical sample under the following conditions.
Instrument: HLC-8320 GPC manufactured by Tosoh Corporation,
Column: MIXED-C manufactured by Polymer laboratories, with a length of 300 mm, a diameter of 7.5 mm and a thickness of 5 µm,
Mobile phase: AK-225/THF = 6/4 (volume ratio),
Flow rate: 1.0 mL/min,
Oven temperature: 37°C,
Sample concentration: 1.0 mass%,
Injection volume: 50 µL,
Detector: RI, and
Standard sample: polymethyl methacrylate (Mp = 2,136,000, 955,000, 569,000, 332,800, 121,600, 67,400, 31,110, 13,300, 7,360, 1,950, 1,010, and 550)

### (Water Repellency)

A test cloth prepared was rated for water repellency by the spray test in JIS L1092:1998 on the scale of from 1 to 5. The higher the rating, the better the water repellency. The appendage + (-) to a grade indicates water repellency slightly better (or worse) than the standard level for the grade.

### (Wash Durability of Water Repellency)

After the above-mentioned water repellency test, the test cloth was washed repeatedly 10 times or 20 times in accordance with AATCC Monograph 6-2016. After the washings, the test cloth was tumble-dried in accordance with AATCC Monograph 6-2016, and rated for water repellency.

### (Oil Repellency)

For evaluation of oil repellency, a droplet of nujol (with a 5 mm diameter) was placed, and after 60 seconds, the droplet was visually examined for penetration of the droplet. The test cloth was rated as "A" when the droplet stayed spherical after 60 seconds, and rated as "C" when the droplet had completely penetrated into the cloth.
(Monomer a)
   C6OLF: CH₂=CH-(CF₂)₅CF₃ (manufactured by Tokyo Chemical Industry Co., Ltd.)
(Monomer b)
   StV: vinyl stearate (manufactured by Tokyo Chemical Industry Co., Ltd.)
   PaV: vinyl palmitate (manufactured by Tokyo Chemical Industry Co., Ltd.)
   MyV: vinyl myristate (manufactured by Tokyo Chemical Industry Co., Ltd.)
(Monomer c)
   VCM: CH₂=CHCl (manufactured by Yokohama Chemical Co., ltd.)
(Monomer d)
   4-HBVE: 4-hydroxybutyl vinyl ether (manufactured by FUJIFILM Wako Pure Chemical Corporation)
   EGMAE: ethylene glycol monoallyl ether (manufactured by Tokyo Chemical Industry Co., Ltd.)
(Monomer e)
   LaV: vinyl laurate (manufactured by Tokyo Chemical Industry Co., Ltd.)
   AcV: vinyl acetate (manufactured by Tokyo Chemical Industry Co., Ltd.)

### (Surfactants)

PEL-12: 10 mass% aqueous solution of polyoxyethylene lauryl ether (adduct with about 12 moles of ethylene oxide, PEL-12, EMULGEN 120, manufactured by Kao Corporation)
PEO-30: 10 mass% aqueous solution of polyoxyethylene oleyl ether (adduct with about 30 moles of ethylene oxide, PEO-30, EMULGEN 430, manufactured by Kao Corporation)
P104: 10 mass% aqueous solution of ethylene oxide-propylene oxide polymer (average molecular weight: 1670, containing 40 mass% of ethylene oxide, manufactured by NOF Corporation under the product name of Pronon #104)
P204: ethylene oxide-propylene oxide polymer (average molecular weight: 3330, containing 40 mass% of ethylene oxide, manufactured by NOF Corporation under the product name of Pronon #204)
STMAC: 63 mass% solution of C₁₆₋₁₈ alkyl trimethylammonium chloride chloride (STMAC) in water and isopropyl alcohol (LIPOQUAD 18-63 manufactured by of Lion Specialty Chemicals Co., Ltd.)

### (Media)

Water: ion-exchanged water
DPG: dipropylene glycol

### (Polymerization Initiator)

VA-061A acetate: 20 mass% aqueous solution of the acetate of 2,2'-azobis[2-(2-imidazolin-2-yl)propane] (VA-061, manufactured by FUJIFILM Wako Pure Chemical Corporation) (VA-061A, VA-061:acetic acid = 1:0.8 (mass ratio))

### (EXAMPLES 1 TO 21)

The monomers (other than AcV and VCM), surfactants and media shown in Tables 1 to 2 were put in a glass vessel and heated at 55°C for 30 minutes and mixed with a homomixer (BIO MIXER manufactured by Nihonseiki Kaisha, Ltd.) to obtain a liquid mixture. At 55°C, the resulting liquid mixture was emulsified with a high-pressure emulsifier (MiniLab, manufactured by APV Rannie) preliminarily under 10 MPa and then under 40 MPa to obtain an emulsion. The resulting emulsion was cooled in a stainless steel reactor to 30°C or below. The polymerization initiator shown in Tables 1 to 2 was added, and the gas phase was replaced with nitrogen. AcV and VCM were introduced in the amounts shown in Tables 1 and 2, and polymerization was carried out at 55°C for 24 hours with stirring to obtain a dispersion containing a fluorinated polymer. The conversion rate of the monomers to a fluorinated polymer, the solid content of the dispersion and the Mn and Mw of the fluorinated polymer in the dispersion are shown in Tables 1 and 2.

In Tables 1 and 2, the number of carbon atoms in the alkyl group in each monomer (vinyl carboxylate) as monomer b and monomer d is shown in parentheses on the right of the monomer. The amounts (g) of surfactants and polymerization initiator include the media in them.

The fluorinated polymer dispersions were diluted with tap water to a solid content of 2.0 mass%, and an isocyanate crosslinking agent (MEIKANATE TP-10, product name, manufactured by Meisei Chemical Works, Ltd.) was added to a concentration of 1.0 mass% to obtain water/oil repellent compositions.

Polyethylene terephthalate (PET) dty taffeta, Taslan nylon taffeta and cotton broadcloth was dipped in the water/oil repellent compositions and wrung to a wet pickup of from 50 to 60 mass% for the PET dty taffeta, to a wet pickup of from 55 to 65 mass% for the Taslan nylon taffeta, and to a wet pickup of from 60 to 65 mass% for the cotton broadcloth. They were heated at 110°C for 90 seconds, then dried at 170°C for 60 seconds and left in a room at 23°C under a humidity of 50% overnight to obtain test cloths.

The water repellency (initial), the durability of the water repellency (water repellency after 10 washings (referred to as "HL10")) and water repellency after 20 washings (referred to as "HL20")) and the oil repellency (initial) of the test cloths were evaluated by the above-mentioned methods. The results are shown in Tables 3 and 4.

**[Table 1]**

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|---|---|
| Amount (g) | Monomer a | C60LF | 78.4 | 91.5 | 104.5 | 103.8 | 103.8 | 103.8 | 91.8 | 118.6 | 97.3 | 59.7 | 108.5 | 114.0 | 88.3 |
| | Monomer b | StV (C17) | 156.8 | 130.6 | 130.6 | 129.8 | 127.1 | 127.4 | 133.2 | 112.8 | 139.8 | 174.7 | - | - | 157.1 |
| | | PaV (C15) | - | - | - | - | - | - | - | - | - | - | 121.4 | - | - |
| | | MyV (C13) | - | - | - | - | - | - | - | - | - | - | - | 114.5 | - |
| | Monomer e | LaV (C11) | - | - | - | - | - | - | - | - | - | - | - | - | - |
| | | AcV (C1) | - | - | - | - | - | - | - | - | - | - | - | - | - |
| | Monomer c | VCM | 26.1 | 39.2 | 26.1 | 26.0 | 26.0 | 26.0 | 27.2 | 25.8 | 20.2 | 22.8 | 27.2 | 28.6 | 12.2 |
| | Monomer d | 4-HBVE | - | - | - | - | 2.7 | - | - | - | - | - | - | - | - |
| | | EGMAE | - | - | - | - | - | 2.4 | 7.4 | 2.4 | 2.2 | 2.3 | 2.5 | 2.6 | 2.0 |
| | Surfactant | PEL-12 | - | - | - | - | - | - | - | - | - | - | - | - | - |
| | | PEO-30 | 78.4 | 78.4 | 78.4 | 77.9 | 77.9 | 77.9 | 77.9 | 77.9 | 77.9 | 77.9 | 77.9 | 77.9 | 77.9 |
| | | P104 | - | - | - | - | - | - | - | - | - | - | - | - | - |
| | | P204 | 1.3 | 1.3 | 1.3 | 1.3 | 1.3 | 1.3 | 1.3 | 1.3 | 1.3 | 1.3 | 1.3 | 1.3 | 1.3 |
| | | STMAC | 2.1 | 2.1 | 2.1 | 2.1 | 2.1 | 2.1 | 2.1 | 2.1 | 2.1 | 2.1 | 2.1 | 2.1 | 2.1 |
| | Medium | Water | 378.6 | 378.6 | 378.6 | 355.4 | 355.4 | 355.4 | 355.4 | 355.4 | 355.4 | 355.4 | 355.4 | 355.4 | 355.4 |
| | | DPG | 65.3 | 65.3 | 65.3 | 64.9 | 64.9 | 64.9 | 64.9 | 64.9 | 64.9 | 64.9 | 64.9 | 64.9 | 64.9 |
| | Polymerization Initiator | VA-061 acetate | 13.1 | 13.1 | 13.1 | 38.9 | 38.9 | 38.9 | 38.9 | 38.9 | 38.9 | 38.9 | 38.9 | 38.9 | 38.9 |
| Molecular weight | Mn | | 23000 | 20000 | 21000 | 22000 | 19000 | 18000 | 17000 | 16000 | 18000 | 21000 | 17000 | 15000 | 22000 |
| | Mw | | 63000 | 54000 | 48000 | 50000 | 46000 | 47000 | 45000 | 46000 | 50000 | 55000 | 49000 | 47000 | 57000 |
| Conversion rate | | | A | A | A | A | A | A | A | B | A | A | A | A | B |
| Dispersion Solid content [%] | | | 33.2 | 33.5 | 33.2 | 33.8 | 33.2 | 33.9 | 33.9 | 31.1 | 33.1 | 33.3 | 33.3 | 33.4 | 31.6 |

**[Table 2]**

| | | | Ex. 14 | Ex. 15 | Ex. 16 | Ex. 17 | ' Ex. 18 | Ex. 19 | Ex. 20 | Ex. 21 |
|---|---|---|---|---|---|---|---|---|---|---|
| Amount (g) | Monomer a | C60LF | 50.0 | 135.4 | 117.5 | 160.9 | 119.8 | 103.8 | 292.2 | 199.1 |
| | Monomer b | StV (C17) | 159.5 | 108.5 | 101.5 | - | - | 111.9 | - | 180.1 |
| | | PaV (C15) | - | - | - | - | - | - | - | - |
| | | MyV (C13) | - | - | - | - | - | - | - | - |
| | Monomer e | LaV (C11) | - | - | - | - | 107.1 | - | - | - |
| | | AcV (C1) | - | - | - | 54.8 | - | 15.6 | 73.1 | - |
| | Monomer c | VCM | 47.1 | 13.6 | 37.9 | 40.2 | 30.0 | 26.0 | 25.8 | - |
| | Monomer d | 4-HBVE | - | - | - | - | - | - | - | - |
| | | EGMAE | 3.0 | 2.0 | 2.7 | 3.6 | 2.7 | 2.4 | - | - |
| | Surfactant | PEL-12 | - | - | - | - | - | - | 29.3 | - |
| | | PEO-30 | 77.9 | 77.9 | 77.9 | 77.9 | 77.9 | 77.9 | - | 37.9 |
| | | P104 | - | - | - | - | - | - | 19.6 | - |
| | | P204 | 1.3 | 1.3 | 1.3 | 1.3 | 1.3 | 1.3 | - | 1.9 |
| | | STMAC | 2.1 | 2.1 | 2.1 | 2.1 | 2.1 | 2.1 | - | 1.5 |
| | Medium | Water | 355.4 | 355.4 | 355.4 | 355.4 | 355.4 | 355.4 | 262.2 | 294.1 |
| | | DPG | 64.9 | 64.9 | 64.9 | 64.9 | 64.9 | 64.9 | 78.2 | 66.4 |
| | Polymerization Initiator | VA-061 acetate | 38.9 | 38.9 | 38.9 | 38.9 | 38.9 | 38.9 | 19.6 | 19.0 |
| Molecular weight | Mn | | 13000 | 19000 | 18000 | 20000 | 21000 | 20000 | 15000 | 12000 |
| | Mw | | 38000 | 40000 | 39000 | 39000 | 40000 | 38000 | 32000 | 35000 |
| Conversion rate | | | B | B | B | A | A | A | A | C |
| Dispersion | Solid content [%] | | 30.7 | 29.9 | 30.4 | 33.9 | 33.1 | 35.5 | 45.7 | 39.2 |

**[Table 3]**

| | | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|---|---|---|
| Fluorinated polymer | Ratio of units [mol%] | Units a | | 20 | 20 | 27 | 27 | 26 | 26 | 22 | 30 | 26 | 15 | 26 | 26 | 26 |
| | | Units b | | 44 | 32 | 37 | 37 | 36 | 36 | 36 | 32 | 42 | 50 | 36 | 36 | 52 |
| | | Units e | | - | - | - | - | - | - | - | - | - | - | - | - | - |
| | | Units c | | 36 | 48 | 37 | 37 | 36 | 36 | 36 | 36 | 30 | 33 | 36 | 36 | 20 |
| | | Units d | | - | - | - | - | 2 | 2 | 6 | 2 | 2 | 2 | 2 | 2 | 2 |
| Evaluation Results | PET dty taffeta | Water repellency | Initial | 5 | 5 | 5 | 5 | 5 | 5 | 5 | 5 | 5 | 5 | 5- | 4+ | 5 |
| | | | HL20 | 4 | 4 | 4 | 4+ | 4 | 5- | 5- | 4- | 5- | 4- | 4 | 4- | 4 |
| | | Oil repellency | Initial | A | A | A | A | A | A | A | A | A | A | A | A | A |
| | Ny Taslan | Water repellency | Initial | 4+ | 3- | 4- | 4- | 4- | 4- | 3+ | 3- | 4- | 4 | 3 | 3- | 4 |
| | | | HL10 | 3 | 3 | 3 | 3 | 4- | 4- | 3 | 3- | 4- | 3 | 3- | 3- | 3 |
| | | Oil repellency | Initial | A | A | A | A | A | A | A | A | A | A | A | A | A |
| | Cotton broadcloth | Water repellency | Initial | 5 | 4 | 5 | 5 | 5 | 5 | 4 | 4 | 5 | 5 | 4 | 4 | 5 |
| | | Oil repellency | Initial | A | A | A | A | A | A | A | A | A | A | A | A | A |

**[Table 4]**

| | | | | Ex. 14 | Ex. 15 | Ex. 16 | Ex. 17 | Ex. 18 | Ex. 19 | Ex. 20 | Ex. 21 |
|---|---|---|---|---|---|---|---|---|---|---|---|
| Fluorinated polymer | Ratio of units [mol%] | Units a | | 10 | 40 | 26 | 26 | 26 | 23 | 40 | 50 |
| | | Units b | | 36 | 36 | 25 | - | - | 28 | - | 50 |
| | | Units e | | - | - | - | 36 | 36 | 14 | 40 | - |
| | | Units c | | 52 | 22 | 47 | 36 | 36 | 33 | 20 | - |
| | | Units d | | 2 | 2 | 2 | 2 | 2 | 2 | - | - |
| Evaluation Results | PET dty taffeta | Water repellency | Initial | 4+ | 3+ | 3+ | 4 | 3+ | 3+ | 4 | 3 |
| | | | HL20 | 4- | 3 | 3 | 3- | 2+ | 3+ | 3 | 2- |
| | | Oil repellency | Initial | C | A | A | A | A | A | A | C |
| | Ny Taslan | Water repellency | Initial | 3+ | 2+ | 2 | 2- | 2- | 2+ | 2 | 3- |
| | | | HL10 | 3- | 2 | 1 | 1+ | 1 | 1+ | 2 | 2 |
| | | Oil repellency | Initial | C | A | A | A | A | A | A | C |
| | Cotton broadcloth | Water repellency | Initial | 4 | 3+ | 3 | 3 | 3 | 3+ | 3+ | 3- |
| | | Oil repellency | Initial | C | A | A | A | A | A | A | C |

The articles of Examples 1 to 13 treated with compositions comprising fluorinated polymers comprising units a, units b and units c in specific ratios showed sufficient oil repellency and high and durable (wash-durable) water repellency.

The article of Example 14 showed lower oil repellency than those of Examples 1 to 13 because the fluorinated polymer comprised less than 15 mol% of units a.

The water repellency of the articles of Example 15 and 21 was not high or durable (wash durable) enough because the fluorinated polymers comprised more than 35 mol% of units a.

The article of Example 21 showed lower oil repellency than those of Examples 1 to 13.

The water repellency of the articles of Examples 16 and 19 was not high or durable (wash-durable) enough because the fluorinated polymers comprised less than 30 mol% of units b.

The water repellency of the articles of Examples 17 and 18 was not high or durable (wash-durable) enough because the fluorinated polymers comprised units based on a vinyl carboxylate having an alkyl group having less than 12 carbon atoms instead of units b.

The water repellency of the article of Example 20 was not high or durable (wash-durable) enough because the fluorinated polymer comprised more than 35 mol% of units a and units based on a vinyl carboxylate having an alkyl group having less than 12 carbon atoms instead of units b.

The entire disclosure of Japanese Patent Application No. 2019-182132 filed on October 2, 2019 including specification, claims, drawings and summary is incorporated herein by reference in its entirety.

## Claims

1. A water/oil repellent composition comprising a fluorinated polymer which comprises units based on a fluoroolefin represented by the following formula (1), units based on a vinyl carboxylate having a C₁₂ or higher alkyl group and units based on a haloolefin other than the fluoroolefin or a derivative thereof,
wherein the ratio of units based on the fluoroolefin is from 15 to 35 mol%, the ratio of units based on the vinyl carboxylate is from 30 to 60 mol%, and the ratio of units based on the haloolefin or derivative thereof is from 5 to 55 mol%, relative to all the units constituting the fluorinated polymer:
CH₂=CH-R^{f} (1)
wherein R^{f} is a C₁₋₈ perfluoroalkyl group.

2. The water/oil repellent composition according to Claim 1, wherein R^{f} in the formula (1) is a C₁₋₆ perfluoroalkyl group.

3. The water/oil repellent composition according to Claim 1 or 2, wherein the vinyl carboxylate has a linear C₁₂ or higher alkyl group.

4. The water/oil repellent composition according to Claim 1 or 2, wherein the vinyl carboxylate has a C₁₂₋₃₀ alkyl group.

5. The water/oil repellent composition according to Claim 1 or 2, wherein the vinyl carboxylate has a C₁₆₋₂₀ alkyl group.

6. The water/oil repellent composition according to any one of Claims 1 to 5, wherein the units based on a haloolefin other than the fluoroolefin or a derivative thereof are units based on vinyl chloride or vinylidene chloride.

7. The water/oil repellent composition according to any one of Claims 1 to 6, wherein the fluorinated polymer further comprises units based on a crosslinkable monomer having a reactive group, and
the ratio of units based on the crosslinkable monomer relative to all the units constituting the fluorinated polymer is from 0.1 to 20 mol%.

8. The water/oil repellent composition according to Claim 7, wherein the reactive group is a hydroxy group, an epoxy group or an amino group.

9. The water/oil repellent composition according to Claim 7 or 8, wherein the crosslinkable monomer is a vinyl ether or an allyl ether.

10. A method for producing a water/oil repellent composition, which comprises polymerizing a monomer component in an emulsion comprising the monomer component, a surfactant and a polymerization initiator,
wherein the monomer component comprises a fluoroolefin represented by the following formula (1), a vinyl carboxylate having a C₁₂ or higher alkyl group and a haloolefin other than the fluoroolefin or a derivative thereof, and the ratio of the fluoroolefin is from 15 to 35 mol%, the ratio of the vinyl carboxylate is from 30 to 60 mol%, and the ratio of the haloolefin or a derivative thereof is from 5 to 55 mol%, relative to the monomer component:
CH₂=CH-R^{f} (1)
wherein R^{f} is a C₁₋₈ perfluoroalkyl group.

11. An article treated with the water/oil repellent composition as defined in any one of Claims 1 to 9.
